# EUROPEAN PATENT SPECIFICATION

(11) **EP 3 970 232 B1**
(45) Date of publication and mention of the grant of the patent: **11.11.2026**
(21) Application number: 20805388.4
(22) Date of filing: 15.05.2020
(51) Int. Cl.: H01Q 1/28, H02S 20/30, H01Q 21/00, H01Q 1/08, B64G 1/66, B64G 1/42, B64G 1/22, B64G 1/10, H02S 30/20, B64G 1/44, B64G 1/50

(54) **LOW EARTH ORBIT MECHANICAL DEPLOYABLE STRUCTURE**
MECHANISCH ENTFALTBARE STRUKTUR MIT NIEDRIGER ERDUMLAUFBAHN
STRUCTURE DÉPLOYABLE MÉCANIQUE À ORBITE BASSE

(30) Priority: 15.05.2019 US 201962848317 P; 18.02.2020 US 202062977860 P; 18.02.2020 US 202062977864 P; 18.02.2020 US 202062978081 P
(43) Date of publication of application: 23.03.2022
(73) Proprietor: AST & Science, LLC, Miami, FL 33131 (US)
(72) Inventor: BRAUN, Avi, 4728034 Ramat HaSharon (IL); MARTINEZ DE OSABA FERNANDEZ, Aitor, Barcelona (ES); HERNANDEZ BAHLSEN, Javier, 08950 Esplugues de LLobregat (ES); AVELLAN, Abel, Coral Gables, FL 33143 (US); YAO, Huiwen, Potomac, MD 20854 (US); HALPERIN, Adam H., Silver Spring, MD 20901 (US); GOMEZ, Mariano Torre, Sunny Isles, FL 33160 (US)
(74) Representative: P&TS SA (AG, Ltd.)
(86) International application number: PCT/US2020/033221
(87) International publication number: WO 2020/232386

(56) References cited:
- KR-B1- 101 468 997
- US-A- 5 196 857
- US-A- 5 386 953
- US-A- 6 087 991
- US-A1- 2011 023 484
- US-A1- 2012 227 916
- US-A1- 2012 325 974
- US-A1- 2012 325 974
- US-A1- 2017 021 947
- US-A1- 2018 142 729
- US-A1- 2018 201 393
- US-B1- 8 757 554

## Description

### RELATED APPLICATIONS

This application claims the benefit of priority of U.S. Application No. 62/848317, filed on May 15, 2019, Spanish Application No. 2020301123, filed on February 13, 2020, and U.S. Application No. 62/977,846 filed on February 18, 2020. This application also claims priority to Spanish Application No. 202030124, filed on February 13, 2020, Spanish Application No. 202030125, filed February 13, 2020, U.S. Application No. 62/977,860, filed February 18, 2020, and U.S. Application No. 62/978,081, filed February 18, 2020.

### BACKGROUND

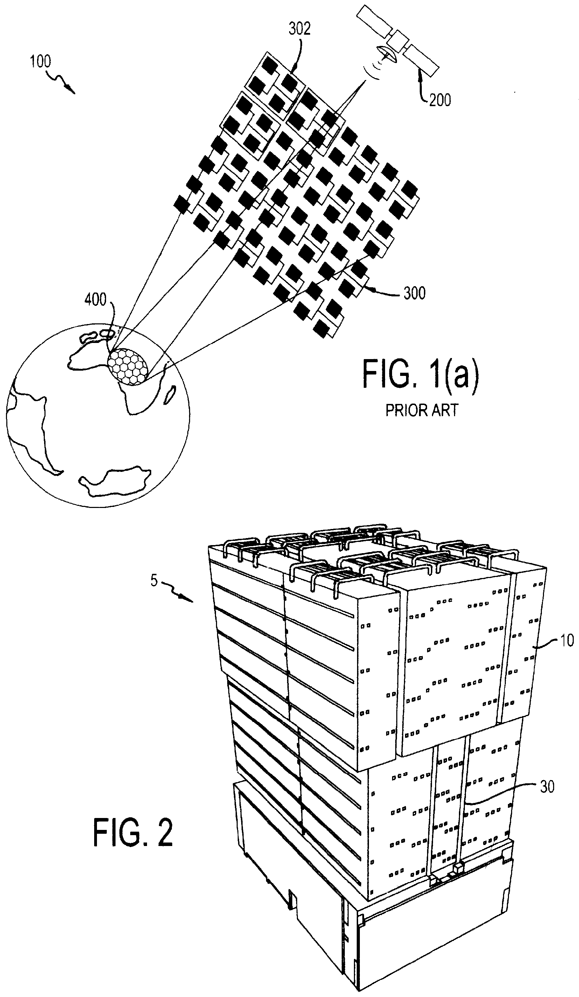

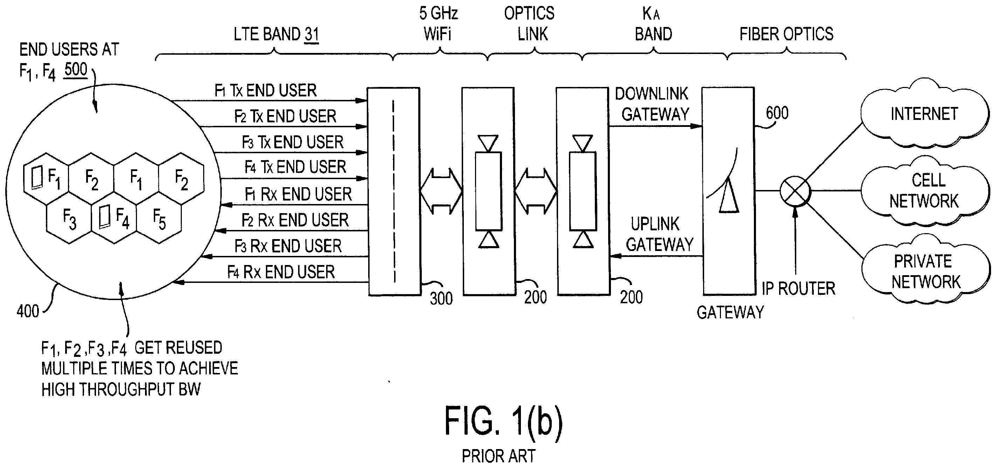

U.S. Patent No. 9,973,266 and U.S. Publ. No. 2019/0238216 show a system for assembling a large number of small satellite antenna assemblies in space to form a large array. As disclosed in the '266 Patent, FIGS. 1(a), 1(b) show a satellite communication system 100 having an array 300 of small satellites 302 and a central or control satellite 200. The small satellites 302 communicate with end users 500 within a footprint 400 on Earth, and also communicate with the control satellite 200, which in turn communicates with a gateway 600 at a base station. The small satellites 302 can each include, for example, a processing device (e.g., a processor or controller) and one or more antenna elements. And the control satellite 200 can include a processing device and one or more antenna or antenna elements.

U.S. Patent No. 5,386,953 refers to a series of spacecraft designs for a Satellite Communication System.

U.S. Patent Application No. 15/216,596 refers to a space-based solar power station, a power generating satellite module and/or a method for collecting solar radiation and transmitting power generated using electrical current produced therefrom, and/or compactible structures and deployment mechanisms used to form and deploy such satellite modules and power generation tiles associated therewith.

U.S. Patent Application No. 13/044,230 refers to a deployable flat panel array technology that includes panel arrays and/or methods for multi-axial deployment of a panel array.

U.S. Patent Application No. 13/333,859 refers to a deployable structure with panels forming an antenna equipped with a solar generator that includes: a set of antenna panels each having a substantially rectangular useful surface, the antenna panels abutting each other on first sides parallel to each other, at least one photovoltaic solar panel, each photovoltaic solar panel abutting an antenna panel on a second side of said antenna panel perpendicular to the first sides, first articulation systems, each of said articulation systems enabling an antenna panel to be caused to pivot relative to an adjacent antenna panel about an axis substantially parallel to the first sides of said antenna panels, a second articulation system for each photovoltaic solar panel, each of said articulation systems enabling a photovoltaic solar panel to be caused to pivot relative to the antenna panel that it abuts about an axis substantially parallel to the second side of said antenna panel.

US2012/0227916 A1 according to its abstract, discloses a deployable flat panel array technology which includes panel arrays and/or methods for multi-axial deployment of a panel array. The panel array can include a first row of panels, a second row of panels, and at least two respective panels of each of the first and the second rows are coupled together via a carpenter tape hinge and allow for multi-axial deployment to form the panel array.

### SUMMARY

An antenna array as a plurality of square or rectangular antenna assemblies. Each assembly includes a first antenna assembly surface with a solar cell and a second antenna assembly with one or more antenna elements. The antenna assemblies are interconnected without gaps therebetween to form a first contiguous array surface comprised of the first antenna assembly surfaces and a second contiguous array surface comprised of the second antenna assembly surfaces.

### BRIEF DESCRIPTION OF THE DRAWINGS

FIGS. 1(a), 1(b) show a conventional structural array;
FIG. 2 is a perspective view of a structural array in a stowed configuration;
FIG. 3(a) is a perspective view of a 1x1 structural element of the structural array of FIGS. 2(a), 2(b);
FIG. 3(b) is a perspective view of a 2x1 structural element;
FIG. 3(c) is a perspective view of a 2x2 structural element; and
FIG. 3(d) is a detailed view of the spring tape connections.

### DETAILED DESCRIPTION

In describing the illustrative, non-limiting embodiments of the disclosure illustrated in the drawings, specific terminology will be resorted to for the sake of clarity. However, the disclosure is not intended to be limited to the specific terms so selected, and it is to be understood that each specific term includes all technical equivalents that operate in similar manner to accomplish a similar purpose. Several embodiments of the disclosure are described for illustrative purposes, it being understood that the disclosure may be embodied in other forms not specifically shown in the drawings.

Turning to FIG. 2, the present disclosure is a Low Earth Orbit (LEO) Mechanical Deployable Structure (LMDS) 5. The LMDS 5 is a self-deployable structure for space applications formed by a plurality of discrete antenna assemblies 10, referred to here as remote satellite modules or just panels or tiles 10, all of them mechanically connected by a connection or interconnection assembly. The LMDS 5 is a satellite system having one or more remote satellite modules or assemblies, in the form of tiles 10, that together form a single large phase array in space. Each satellite module assembly has a plurality of satellite tiles 10 that are mechanically connected together by one or more hinges. A plurality of satellite module assemblies can also be connected in space to form the single large phase array having a single orbital inclination and/or single aperture.

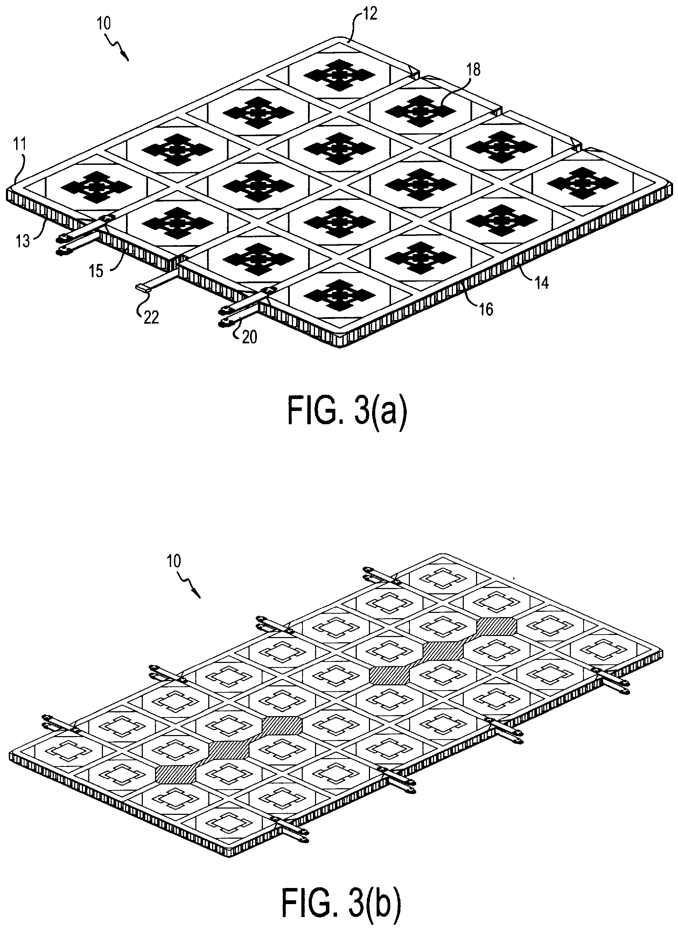

In one example embodiment shown in FIG. 3(a), the tiles 10 are individually separate and distinct, and are rectangular in shape. The tiles 10 are thin and have an outer layer 11, inner layer 13, and middle layer 15. The outer layer 11 can be formed by a first thin plate with a square or rectangular first planar side 12 (here shown as top plate 11 with a top or top surface 12) with a first side surface. The inner layer 13 can be formed by a second thin plate 13 having a second planar side 14 (here shown as a bottom plate 13 with a bottom or bottom surface 14) opposite the first side 12 and having a second side surface. The middle layer can be formed by a middle structure, such as a honeycomb support structure 15, that is positioned at the interior of the tile 10 between the first plate 11 and the second plate 13. The inner, outer and middle layers have four lateral sides or side edges 16. The tiles 10 have a rectangular cross-section that forms the shape of the lateral sides 16 that define the tile thickness which is substantially less than the length and/or width of the tile 10. The first and second plates 11, 13 and the support structure 15 are lightweight. The support structure 15 provides structural support to the first and second plates 11, 13. However, in other embodiments, a support structure 15 need not be provided.

The deployable structure 5 can be launched in a stowed configuration (FIG. 2) and deployed to a large deployed configuration (FIG. 1(a)) once in orbit (e.g., under no gravity conditions). In the stowed configuration, the tiles 10 are in a compact form that can be transported to space. The tiles 10 can be arranged in any suitable manner, such as for example folded onto each other so that the tiles 10 are in stacked arrangement with the top surface 12 of one tile facing and parallel to the top or bottom surface 12, 14 of another tile 10, though one or more of the tiles 10 can also optionally be positioned orthogonal to other tiles 10. In the deployed configuration (e.g., FIG. 1(a)), the tiles 10 are unfolded and substantially planar with one another to form a structural array. Thus, the antenna 18 is received in a recess of the top plate 11 so that the top of the antenna 18 is flush with the top surface 12 of the top plate 11 to form a planar top surface 12. And the solar cells can be positioned in a recess of the bottom plate 13 so that the top surface of the solar cells are flush with the bottom surface 14 to form a planar bottom surface 14. Thus, the top and bottom surfaces 12, 14 can come together in the stowed configuration without gaps or spacing therebetween. In accordance with one embodiment of the present disclosure, the tiles form a contiguous uniform uninterrupted surface.

The LMDS 5 can be utilized for a number of applications, including for example an antenna, reflector, or data center. FIGS. 3(a)-3(d) show one embodiment of the LMDS 5 utilized for an antenna, and the plurality of tiles 10 are antenna assemblies. Each antenna assembly 10 represents a small satellite (also referred to here as a micron) and has one or more antenna elements 18 and a processing device (e.g., processor or controller). The antenna assemblies 10 are connected together by an interconnection assembly having one or more mechanical connectors 20, electrical connectors 22 that enable power and/or data transfer between the antenna assemblies 10, and one or more latches that retain the structure 5 in the stowed configuration (FIG. 2). The electrical connector 22 electronically connects the electronic components (e.g., processing device, sensors, actuators, power) of adjacent tiles 10. Thus, the array of tiles 10 is modular, and the size and shape of the array can be adjusted by adding or removing tiles 10.

The structure 5 deploys in a passive way, for example, the antenna assemblies 10 are connected by stored-energy connectors 20. The stored-energy connectors 20 have a stored-energy position and a released-energy position. In the folded stowed configuration of the array of antenna assemblies 10 (FIG. 2(a)), the stored-energy connectors 20 are in the stored-energy position, where they retain mechanical energy and are biased outward to the released-energy position. In the unfolded deployed configuration of the array of antenna assemblies 10 (FIG. 2), the stored-energy connectors 20 are in the released-energy position. For example, in one embodiment the connectors 20 can mechanically store energy, such as for example an elongated straight one-piece integral spring that is biased outward (i.e., to a linear position). In the stored-energy position, the spring connectors 20 can folded (e.g., curved to fold in half), and in the released-energy position the spring connectors 20 can be unfolded and substantially straight (i.e., linear) or planar. However, the stored-energy connectors 20 need not be a spring, but can be any suitable connector that stores energy, either mechanical or electrical.

The structure 5 is kept in the stowed configuration by one or more mechanical and/or electrical locking mechanisms 30 having a locked state and an unlocked state, such as a latch. The locks can be, for example, a latching system that is positioned on the outer surface of the LMDS 5 when in the stowed position (FIG. 2). Or the locks can be, for example, a mechanism that prevents rotation of the tiles 10. In the locked state, the locks prevent the array of tiles 10 from inadvertently moving from the stowed configuration to the deployed configuration until the locks are placed in the unlocked state. Once the deployment is ready to initiate, the latching is triggered to unlock the folded antenna arrays. For example, the latches can be manually actuated or actuated by a processing device at the antenna assembly 10. Once the latches are unlocked, the stored-energy connectors begin to move the array of antenna assemblies 10 to the deployed configuration in a controlled manner. The energy in the stored-energy connectors 20 begins to release and the stored-energy connectors move toward the released-energy position. As the stored-energy connectors move to the released-energy position, the antenna assemblies 10 unfold from the stowed configuration into the deployed configuration.

The stored-energy connectors 20 are folded into the stored-energy position when the LMDS 5 is on Earth. The LMDS 5 can then be transported into space in the compact stowed configuration. Once in space, the latch(es) are unlocked (e.g., manually or electrically such as by a remotely operated solenoid) and the stored-energy connectors 20 move the antenna assemblies 10 into the deployed configuration utilizing the mechanical power that is stored in the stored-energy connector 20. Thus, in one embodiment where the connectors 20 are mechanical, the antenna array does not require any electric power to move from the stowed configuration to the deployed configuration. In addition, the connectors 20 are positioned to not interfere with operation of the antenna assemblies 10. For example, the connectors 20 are positioned at the side edges 16 of the antenna assemblies 10 so they do not interfere with electrical operations at either the top 12 or bottom 14 of the antenna assembly 10. And, the connectors 20 allow the assemblies 10 to come together in the deployed configuration so that the sides 16 come into contact with one another to form a single contiguous uniform and planar surface without gaps between adjacent antenna assemblies 10.

### CONNECTORS 20

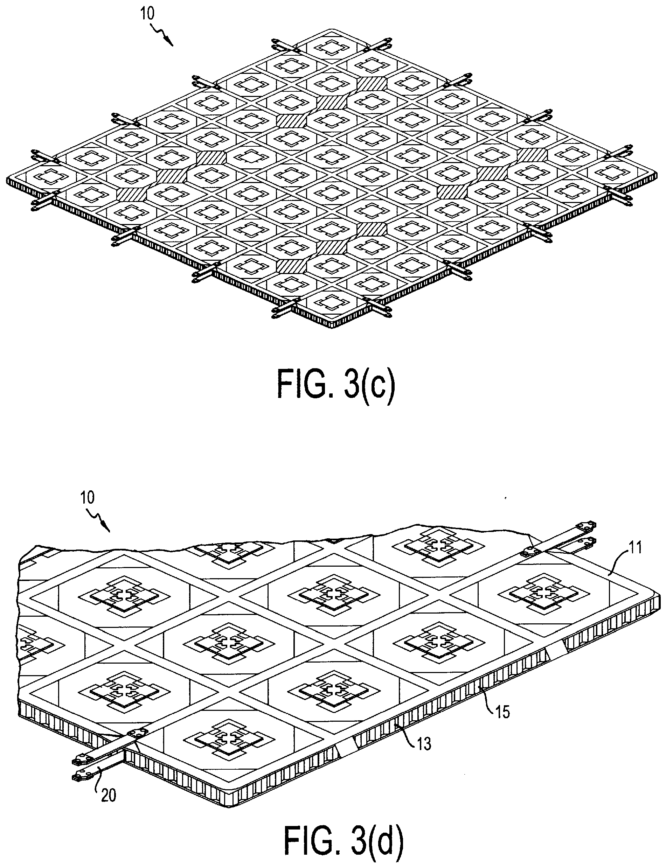

As shown in FIGS. 3(a)-(d), in one example embodiment, the stored-energy connectors 20 are a tape spring, though other suitable connectors can be utilized. The tape springs can be thin, linear and elongated. They can either be flat (i.e., a linear cross-section) or arcuate (i.e., a curved cross-section). In addition, the interconnection assembly can include other attachment mechanisms, such as latches, joints, hinges or connectors that connect to the tiles 10. The tape springs 20 are spring loaded hinges that once deployed, give the structure a required mechanical stiffness. As best shown in FIG. 3(a), one or more tape springs 20 are provided at one or more of the side edges 16 of the antenna assembly 10. In FIG. 3(d), the tape springs 20 are metal structures that can be curved to create a spring-like bias when folded in the stored-energy position, and a locking force when in the deployed released-energy position. The locking force maintains the antenna assemblies 10 in the deployed configuration and prevent them from returning to the deployed configuration. Thus, the tiles are small separate discrete devices that are physically connected to one another by one or more connectors 20 to form a large array in space.

The connector 20 has sufficient length to connect neighboring tiles 10 when they are folded upon one another in the stowed configuration and substantially parallel to one another, and also in the deployed configuration when they are unfolded and substantially planar with one another. The tape spring connectors 20 deliver energy to deploy the panels and keeps the panels 10 in position once deployed. The connectors 20 can include outwardly biased springs that are biased to spring outward when in the stowed configuration. When the panels 10 are folded upon one another, the connectors 20 are in a bent or folded configuration and are biased outward to be in a straightened or linear position. In the stowed configuration, the springs apply an outward force that facilitates movement of the panels 10 from the stowed configuration to the deployed configuration.

As further illustrated in FIGS. 3(a)-(d), a connector 20 (i.e., the tape spring in the current example embodiment) can be attached (e.g., by fastener(s), adhesive or the like) to both the top surface 12 and the bottom surface 14 of the tile 10. And tape springs 20 on the top surface 12 align with the tape springs 20 on the bottom surface 14. However, the tape springs 20 can be provided at any suitable position at the tile 10, such as between the top and bottom surfaces 12, 14. And, tape springs 20 need not be provided on both the top and bottom surfaces 12, 14, or the tape springs on the top surface 12 need not be aligned with the tape springs on the bottom surface 14.

It is further noted that in the example above, the stored-energy connectors 20 are a spring tape that stores mechanical energy. However, any suitable stored-energy connector can be utilized that mechanically stores energy. In addition, any suitable connector can be utilized that electronically stores energy. In addition, the stored-energy connectors 20 can move the tiles 10 from the stowed configuration to the deployed configuration in any suitable amount of time, from hours to days.

Thus, each tile 10 has at least one connector 20 that mechanically connects the tile 10 to an adjacent tile 10, but at the same time allows the tile 10 to move (e.g., bend, fold, rotate or pivot) with respect to one or more of the other tiles 10, and move between the stowed position and the deployed position.

For example, the connectors 20 allow the top or bottom surface 12, 14 of a first tile 10 to touch the top or bottom surface of an n^{th} tile 10. And, the first tile 10 can be either vertically or horizontally aligned with the n^{th} tile 10, and the first and n^{th} tiles 10 need not be immediately adjacent or an adjacent tile connected by the connector. That is, the first tile can be positioned several tiles away from the n^{th} tile, such that there are intervening tiles between the first and n^{th} tiles. For example, the n^{th} tile can be the second tile, which is immediately adjacent the first tile in the same row or column. Or the n^{th} tile can be the fifth tile, which has three intervening tiles between the first and fifth tiles in the same row or column. Or the n^{th} tile can be the fifth tile, which can be in a different row and column as the first tile. In one embodiment, each tile has two connectors and is mechanically connected to two adjacent tiles.

In a further embodiment of the disclosure, the connector 20 can be a hinge that directly couples a first tile 10 to an immediately adjacent second tile 10. The hinge can be coupled to the inside or outside surfaces of the tiles, or to the middle layer of the tile. The hinge can provide a mechanical and/or electrical connection, though in one embodiment the hinge at least has a mechanical connection and can be controlled electronically to move between the operating configuration and the storage configuration. Any suitable control mechanism can be utilized to control the rotation of the modules, either mechanical and/or electrical. For example, the control mechanism can be a coil that receives an electric current to cause an electromagnetic force, and are positioned on the tiles to control rotation of the tiles 10 with respect to one another.

The electromagnetic forces formed by the coil can cause the tiles 10 to move, and/or can cause the hinges to move. Other suitable control mechanisms can be provided, such as magnets, a biased mechanical spring and/or solenoids. If needed, electrical wires or fibers can pass through the hinges between tiles to carry data such as control signals to control movement of the phase array in space and/or to control movement of the tiles 10 between the operating and storage configurations. In one embodiment, the wire can carry a current that passes through the coils to create a magnetic field that opens the hinge to move the tiles 10 from a storage configuration to an operating configuration. The coils can also be utilized to tilt the phase array to track the sun and/or the pointing of the aperture or to otherwise move the phase array 300. In another embodiment, the connector 20 can include both a tape spring and a hinge at one or more of the side edges of the tiles 10.

### LMDS CONFIGURATION

The tiles 10 forming the structure 5 can be assembled in different configurations, i.e. 1x1 Tile, 2x1 Tile, 2x2 Tile, etc. as shown in FIGS. 3(a), 3(b), 3(c), respectively. Each of the tiles 10 have a communications face/side, here shown as the top 12, and a solar power face/side, here shown as the bottom 14. The communications side 12 have the antenna elements 18 that conduct radio frequency (RF) communications with user devices on Earth. By the propagation of the tiles 10, this generates the array/structure 5 with one RF side and one solar panel side. The RF side forms a top surface 12 that faces Earth, and the second side forms a bottom surface 14 that faces away from Earth.

In addition, a solar cell can be positioned on the surface (here, the bottom surface 14) that faces away from the Earth. The solar cell receives solar energy from the Sun, especially when the LMDS 5 is between the Earth and the Sun. Thus, one side of the satellite module can have the solar cell and the opposite side can point the antenna in the desired direction. The solar energy can be utilized to power the electronic components of the tile or for array thrust. For example, the tiles can be made from photovoltaic material or other material that converts solar energy to electrical energy to operate as a solar panel, and also operate as an antenna structure (or other structure of the satellite or satellite module) to transmit and receive signals in accordance with the present disclosure. The electrical energy is used to power the satellite or satellite modules or stored for later use. Thus, the same structure can be used for solar energy and for operation as a satellite antenna.

In the deployed position, the tiles are closely arranged and can contact one or more of its neighboring tile. Accordingly, the RF side collectively form the large phase array. The tiles 10 can optionally also house other electronic components, such as a receiver, transmitter or processing device(s). Those electronic components are positioned at the interior (between the top surface and the bottom surface) of the tile so that they do not interfere with the operation of the antenna elements 18 or the formation of the phase array.

To further avoid any interference between the connectors 20 and the RF side 12, the connectors 20 are arranged such that when the structure deploys, the connectors 20 do not obstruct the top surface of the RF side 12. In FIG. 3(a), the tile 10 is a 4 x 4 array of sixteen antenna elements 18 with two connectors 20 formed at each of two side edges of the tile 10. However, other suitable sizes and dimensions can be utilized. For example, the tile 10 can be formed as a 4 x 8 array of 32 antenna elements 18, FIG. 3(b), or an 8 x 8 array of 64 antenna elements 12, FIG. 3(c), and the connectors 20 can be located at the outer side edges of the tile 10.

The LMDS 5 is modular and can be designed in many different layout combinations (tile sizes, number of tiles, overall shape, overall size, etc.) but the shape of the tiles is square and rectangular, and all tiles 10 are mechanically interconnected (for each independent deployable area). In one embodiment, the structure will deploy all at once. However, in other embodiments, the structure can deploy in two halves or four quarters. Although the LMDS is especially configured for LEO orbit, it is applicable to any other possible orbit, or on ground.

FIG. 1(a) show the structure 5 having a square shape, though in other applications the structure 5 has a circular shape. In addition, the various sizes, layout and shapes of the individual tiles 10 differ, as well as the numbers of columns and rows of tiles 10 in the array. The overall shape and structure can be changed by adding or removing tiles 10, or by changing the number of rows, columns, size or shape of the tiles.

### LATCHES

In one embodiment of the disclosure, the locking mechanism 30 can be one or more latches. The latches can be micro sized and light weight and are attached to one or more of the tiles 10. The latches hold down one or more of the tiles 10 and prevent the array 5 from inadvertently moving from the stowed configuration to the deployed configuration. The latches can be any suitable device. In one embodiment, the latches are made of a Shape Memory Alloy (SMA). A small current is passed through the latch, which causes the latch to unlock the array of tiles 10 so that the tiles 10 can move from the folded stowed configuration to the unfolded deployed configuration. Unlocking can be controlled manually by manually moving the latch, pressing a button to remotely activate the latch, or automatically by a processor at one or more of the tiles 10. The latches respond quickly (within milliseconds) and reliably, despite the harsh conditions in space, where temperatures can be -65 to +70 degrees Celsius.

### TRANSPORTATION

In one embodiment of the operating configuration, all of the tiles 10 are arranged in a single plane, i.e., all of the tiles are side by side with the top surfaces in a single plane. And in the storage configuration, all of the connected tiles are aligned and arranged facing one another in a line (single column).

Accordingly, the system has a very large number of satellite tiles that are connected by connectors 20. The tiles 10 can be placed in a storage or transport configuration. The small tiles 10 are separate discrete devices and are physically connected to one another by one or more connectors 20. The tiles can be folded into the transport configuration for storage and transportation and then deployed in space into the large satellite array of the operating configuration.

For example, in the storage configuration, the multiple tiles are folded along the connectors 20 and placed together in a single shipping container such as a box, for transport on a rocket or other transport device or space craft. Once the shipping container(s) reaches a release position in space at a desired orbit, the shipping container can be opened and the tiles can be released into space. The tiles can then automatically maneuver to enter into the operating configuration array in space where it forms a very large and dense array of the satellite tiles.

This greatly reduces the space required by the tiles during transport, but enables the tiles to form a very large array when in the operating configuration. The tiles can take up a space of a few square meters depending on the number of tiles, which converts to many square meters when deployed in space. Thus, the satellite array can be formed with minimal human intervention (such as to release the tiles from the shipping container and space craft, and optionally to unlatch the locking mechanism to initiate self-deployment of the connectors), and can even be formed without any physical human intervention (such as to build a frame or other structure for the array). In addition, multiple tiles can be connected together in space to form a single phase array that is hundreds or thousands of square meters in size.

### CONCLUSION

The tiles 10, connectors 20 and locking mechanisms 30 are utilized for the LMDS 5 and deployed in space. However, the tiles 10, connectors 20 and locking mechanisms can be utilized in other structures or applications. And, the LMDS 5 can utilize any suitable tiles, connectors and locking mechanisms, and is not restricted to those shown and described with respect to the illustrative examples. And other suitable positioning of the tiles, connectors and locking mechanism can be provided within the structure as part the LMDS.

It is further noted that the shape and size of the tiles 10 enable them to be placed immediately adjacent to each other in the deployed configuration. That is, all of the sides of the tiles 10 come into direct contact with the respective side of the neighboring adjacent tiles. The connectors enable the tiles to be substantially contiguous with one another to form a single contiguous structure 5 without any gaps between the adjacent tiles 10. The connectors 20 enable (and do not obstruct) adjacent tiles 10 to directly contact one another in the deployed position.

When the LMDS 5 is configured as an antenna array, it (e.g., the antenna elements 18) communicates with processing devices on Earth, such as for example a user device (e.g., cell phone, tablet, computer) and/or a ground station. The present disclosure also includes the method of utilizing the LMDS 5 to communicate with processing devices on Earth (i.e., transmit and/or receive signals to and/or from). The present disclosure also includes the method of processing devices on Earth communicating with the LMDS 5 (i.e., transmit and/or receive signals to and/or from). In addition, while the LMDS 5 is used in Low Earth Orbit (LEO) in the examples disclosed, it can be utilized in other orbits or for other applications. In addition, while the disclosure has been described as for an array of antenna assemblies, the disclosure can be utilized for other applications, such as for example data centers, reflectors, and other structures, both implemented in space or terrestrially.

In one embodiment, the disclosure provides a phase array having a large dense array formed by a plurality of flat discrete satellite modules each having an antenna; a plurality of coils at one or more of the plurality of flat discrete satellite modules, each of said plurality of coils generating an electromagnetic force; said plurality of flat discrete satellite modules interconnected by hinges, wherein the plurality of flat discrete satellite modules have a compact transport configuration for transport to space, and an operating configuration whereby the electromagnetic forces form said plurality of flat discrete satellite modules into a the large dense array in space. In addition, said plurality of flat discrete satellite modules in the operating configuration form a large planar mechanically-interconnected structure. In addition, each of said plurality of flat discrete satellite modules have a solar cell on top and a transmitter on bottom. In addition, the electromagnetic forces pivot said plurality of flat discrete satellite modules about said hinges. In addition, said coil creates a magnetic field that moves the phase array to track the sun or objects on the ground.

In another embodiment, the disclosure provides a phase array having a first module; a second module; a connector connected to the first module and the second module to move the first and second modules between an operating configuration and a storage configuration; and a control mechanism coupled to said connector to move the first and second modules between the operating configuration and the storage configuration. In addition, the first and second modules include an antenna. In addition, said control mechanism comprises a coil and said control mechanism passes a current through said coil to create a magnetic field that moves said first and/or second satellite module to pivot about said connector. In addition, said control mechanism comprises a coil and said control mechanism passes a current through said coil to create a magnetic field that moves the phase array to track the sun or objects on the ground. In addition, said control mechanism comprises a coil and said control mechanism passes a current through said coil to create a magnetic field that moves the phase array to point an aperture formed by the phase array. In addition, said connector comprises a mechanical connector. In addition, an electrical wire or cable passing through said connector. In addition, said first and second modules are flat with a top, bottom and sides, and in the operating configuration are arranged side-by-sides in rows and columns and in the storage configuration are arranged with the tops and/or bottoms facing each other. In addition, said first and second modules are flat with a top, bottom and sides, and having a solar collector on the top and an antenna on the bottom.

In another embodiment, a phase array has a first satellite module; a second satellite module; a mechanical connector comprising a hinge rotatably connected to the first satellite module and the second satellite module to rotate said first satellite module with respect to said second satellite module to move said first and second satellite modules between an operating configuration and a storage configuration; and a control mechanism comprising a coil coupled to said connector to create an electromagnetic field in response to a current passing through said coil, to move the first and second satellite modules about said hinge between the operating configuration and the storage configuration.

It is further noted that the present disclosure can be utilized separately, and can also be utilized in combination with the systems and methods disclosed in U.S. Application titled Solar, Electric, RF Radiator for Self-Contained Structure for Space Application Array, filed May 15, 2020, and U.S. Application titled Thermal Management System for Structures in Space, filed May 15, 2020. Thus, for example, the self-deployable tiles 10 can have structure as shown and described in the Solar, Electric, RF radiator application, and/or can utilize the thermal management as shown and described in the Thermal Management application.

It is further noted that the description and claims use several geometric, relational, directional, positioning terms, such as planar, square, rectangular, linear, flush, elongated, circular, parallel, perpendicular, orthogonal, transverse, flat, side, top, and bottom. Those terms are merely for convenience to facilitate the description based on the embodiments shown in the figures, and are not intended to limit the present disclosure. Thus, it should be recognized that the disclosure can be described in other ways without those geometric, relational, directional or positioning terms. In addition, the geometric or relational terms may not be exact. For instance, surfaces may not be exactly flat, planar or parallel but still be considered to be substantially flat, planar or parallel because of, for example, roughness of surfaces, tolerances allowed in manufacturing, forces applied in practice during use, etc. And, other suitable geometries and relationships can be provided without departing from the scope of the claims.

The foregoing description and drawings should be considered as illustrative only of the principles of the disclosure, which may be configured in a variety of ways and is not intended to be limited by the embodiment herein described. Numerous applications of the disclosure will readily occur to those skilled in the art. Therefore, it is not desired to limit the disclosure to the specific examples disclosed or the exact construction and operation shown and described. Rather, all suitable modifications may be resorted to, falling within the scope of the claims.

## Claims

1. A structure for space comprising:
a plurality of tiles (10) coupled together to form an antenna array comprising a plurality of antenna assemblies, the plurality of tiles having a stowed configuration and a deployed configuration, wherein each of the plurality of tiles is rectangular, has a thin top plate, a middle layer and a thin bottom plate with a rectangular cross section, and has a thickness that is less than a width or length of the tile; and
a plurality of stored-energy connectors (20) connected to adjacent tiles of the plurality of tiles, the plurality of stored-energy connectors configured to store energy in the stowed configuration and configured to release energy to move the plurality of tiles to the deployed configuration in which the plurality of tiles form a uniform and planar surface, wherein all sides of the plurality of tiles are in direct contact with respective sides of adjacent tiles of the plurality of tiles, wherein each of the plurality of stored-energy connectors is connected to inside or outside surfaces of the adjacent tiles or to the respective middle layer of the adjacent tiles, wherein the first stored energy connector and the second stored energy connector are positioned at side edges of the adjacent tiles; and
a locking mechanism (30) having a locked position to lock the plurality of tiles in the stowed configuration and an unlocked position to initiate self-deployment by the stored-energy connectors to move the plurality of tiles to the deployed configuration.

2. The structure of claim 1, wherein the stored energy of the plurality of stored-energy connectors comprise mechanical energy, wherein the plurality of stored-energy connectors is configured to move the plurality of tiles to the deployed configuration without electrical energy.

3. The structure of claim 1 or 2, wherein the plurality of stored-energy connectors each comprise a spring connector.

4. The structure of claim 1, wherein the plurality of tiles form the uniform and planar surface in space.

5. The structure of claim 4, wherein the plurality of stored-energy connectors self-assembles said plurality of tiles in space.

6. The structure of any of claims 1-5, wherein the plurality of tiles is flat.

7. The structure of any of claims 1-6, wherein the plurality of tiles is folded with respect to each other when in the stowed configuration and unfolded with respect to each other when in the deployed configuration.

8. The structure of any of claims 1-7, wherein the plurality of stored-energy connectors is in the released-energy position when the plurality of tiles are in the deployed configuration.

9. The structure of any of claims 1-8, wherein each of the plurality of tiles has a communication side and a solar side, the communication side having one or more antenna elements configured to communicate with user equipment on Earth, and the solar side having one or more solar cells configured to generate power.

10. The structure of any of claims 1-9, wherein the structure is configured to communicate with a processing device on Earth.

## Patentansprüche

1. Struktur für den Weltraum, umfassend:
eine Vielzahl von Kacheln (10), die miteinander gekoppelt sind, um eine Antennenanordnung zu bilden, die eine Vielzahl von Antennenbaugruppen umfasst, wobei die Vielzahl von Kacheln eine verstaute Konfiguration und eine ausgebreitete Konfiguration aufweist, wobei jede der Vielzahl von Kacheln rechteckig ist, eine dünne Deckplatte, eine Mittelschicht und eine dünne Bodenplatte mit rechteckigem Querschnitt aufweist und eine Dicke aufweist, die kleiner ist als eine Breite oder Länge der Kachel; und
eine Vielzahl von Energiespeicherverbindern (20), die mit benachbarten Kacheln der Vielzahl von Kacheln verbunden ist, wobei die Vielzahl von Energiespeicherverbindern so ausgelegt ist, dass sie in der verstauten Konfiguration Energie speichert, und so ausgelegt ist, dass sie Energie freisetzt, um die Vielzahl von Kacheln in die ausgebreitete Konfiguration zu bewegen, in der die Vielzahl von Kacheln eine gleichmäßige und ebene Fläche bildet, wobei alle Seiten der Vielzahl von Kacheln in direktem Kontakt mit jeweiligen Seiten benachbarter Kacheln der Vielzahl von Kacheln stehen, wobei jeder der Vielzahl von Energiespeicherverbindern mit Innen- oder Außenflächen der benachbarten Kacheln oder mit der jeweiligen Mittelschicht der benachbarten Kacheln verbunden ist, wobei der erste Energiespeicherverbinder und der zweite Energiespeicherverbinder an Seitenrändern der benachbarten Kacheln positioniert sind; und
einen Verriegelungsmechanismus (30) mit einer Verriegelungsposition zum Verriegeln der Vielzahl von Kacheln in der verstauten Konfiguration und einer Entriegelungsposition zum Auslösen der Selbstausbreitung durch die Energiespeicherverbinder, um die Vielzahl von Kacheln in die ausgebreitete Konfiguration zu bewegen.

2. Struktur nach Anspruch 1, wobei die gespeicherte Energie der Vielzahl von Energiespeicherverbindern mechanische Energie umfasst, wobei die Vielzahl von Energiespeicherverbindern so ausgelegt ist, dass sie die Vielzahl von Kacheln ohne elektrische Energie in die ausgebreitete Konfiguration bewegt.

3. Struktur nach Anspruch 1 oder 2, wobei die Vielzahl von Energiespeicherverbindern jeweils einen Federverbinder umfassen.

4. Struktur nach Anspruch 1, wobei die Vielzahl von Kacheln im Weltraum eine gleichmäßige und ebene Fläche bildet.

5. Struktur nach Anspruch 4, wobei die Vielzahl von Energiespeicherverbindern die Vielzahl von Kacheln im Weltraum selbstständig anordnet.

6. Struktur nach einem der Ansprüche 1 bis 5, wobei die Vielzahl von Fliesen flach ist.

7. Struktur nach einem der Ansprüche 1 bis 6, wobei die Vielzahl von Kacheln in der verstauten Konfiguration relativ zueinander gefaltet und in der ausgebreiteten Konfiguration relativ zueinander entfaltet ist.

8. Struktur nach einem der Ansprüche 1-7, wobei sich die Vielzahl von Energiespeicherverbindern in der Energiefreigabeposition befindet, wenn sich die Vielzahl von Kacheln in der ausgebreiteten Konfiguration befindet.

9. Struktur nach einem der Ansprüche 1 bis 8, wobei jede der Vielzahl von Kacheln eine Kommunikationsseite und eine Solarseite aufweist, wobei die Kommunikationsseite ein oder mehrere Antennenelemente aufweist, die für Kommunikation mit Benutzergeräten auf der Erde ausgelegt sind, und die Solarseite eine oder mehrere Solarzellen aufweist, die zur Stromerzeugung ausgelegt sind.

10. Struktur nach einem der Ansprüche 1 bis 9, wobei die Struktur so ausgelegt ist, dass sie mit einer Verarbeitungsvorrichtung auf der Erde kommuniziert.

## Revendications

1. Structure pour l'espace comprenant :
une pluralité de tuiles (10) couplées ensemble pour former un réseau d'antennes comprenant une pluralité d'ensembles d'antennes, la pluralité de tuiles ayant une configuration escamotée et une configuration déployée, dans laquelle chaque tuile de la pluralité de tuiles est rectangulaire, a une plaque supérieure mince, une couche intermédiaire et une plaque inférieure mince dotée d'une section transversale rectangulaire, et a une épaisseur qui est inférieure à une largeur ou une longueur de la tuile ; et
une pluralité de connecteurs à énergie stockée (20) connectés à des tuiles adjacentes de la pluralité de tuiles, la pluralité de connecteurs à énergie stockée étant configurés pour stocker de l'énergie dans la configuration escamotée et configurés pour libérer de l'énergie pour déplacer la pluralité de tuiles jusqu'à la configuration déployée où la pluralité de tuiles forment une surface uniforme et plane, dans laquelle tous les côtés de la pluralité de tuiles sont en contact direct avec des côtés respectifs des tuiles adjacentes de la pluralité de tuiles, dans laquelle chaque connecteur de la pluralité de connecteurs à énergie stockée est connecté à des surfaces intérieures ou extérieures des tuiles adjacentes ou à la couche intermédiaire respective des tuiles adjacentes, dans laquelle le premier connecteur à énergie stockée et le deuxième connecteur à énergie stockée sont positionnés au niveau de bords latéraux des tuiles adjacentes ; et
un mécanisme de verrouillage (30) ayant une position verrouillée pour verrouiller la pluralité de tuiles dans la configuration escamotée et une position déverrouillée pour amorcer l'auto-déploiement par les connecteurs à énergie stockée afin de déplacer la pluralité de tuiles jusqu'à la configuration déployée.

2. Structure selon la revendication 1, dans laquelle l'énergie stockée de la pluralité de connecteurs à énergie stockée comprend de l'énergie mécanique, dans laquelle la pluralité de connecteurs à énergie stockée sont configurés pour déplacer la pluralité de tuiles jusqu'à la configuration déployée sans énergie électrique.

3. Structure selon la revendication 1 ou 2, dans laquelle la pluralité de connecteurs à énergie stockée comprennent chacun un connecteur à ressort.

4. Structure selon la revendication 1, dans laquelle la pluralité de tuiles forment la surface uniforme et plane dans l'espace.

5. Structure selon la revendication 4, dans laquelle la pluralité de connecteurs à énergie stockée auto-assemble ladite pluralité de tuiles dans l'espace.

6. Structure selon l'une quelconque des revendications 1 à 5, dans laquelle la pluralité de tuiles est plate.

7. Structure selon l'une quelconque des revendications 1 à 6, dans laquelle la pluralité de tuiles sont pliées les unes par rapport aux autres lorsqu'elles sont dans la configuration escamotée et dépliées les unes par rapport aux autres lorsqu'elles sont dans la configuration déployée.

8. Structure selon l'une quelconque des revendications 1 à 7, dans laquelle la pluralité de connecteurs à énergie stockée sont dans la position d'énergie libérée lorsque la pluralité de tuiles sont dans la configuration déployée.

9. Structure selon l'une quelconque des revendications 1 à 8, dans laquelle chaque tuile de la pluralité de tuiles a un côté communication et un côté solaire, le côté communication ayant un ou plusieurs éléments d'antenne configurés pour communiquer avec un équipement utilisateur sur terre, et le côté solaire ayant une ou plusieurs cellules solaires configurées pour générer de l'énergie.

10. Structure selon l'une quelconque des revendications 1 à 9, la structure étant configurée pour communiquer avec un dispositif de traitement sur terre.
